# EUROPEAN PATENT SPECIFICATION

(11) **EP 1 854 709 B1**
(45) Date of publication and mention of the grant of the patent: **21.10.2009**
(21) Application number: 07251833.5
(22) Date of filing: 01.05.2007
(51) Int. Cl.: B62D 53/12

(54) **Lead on ramp assembly associated with trailer coupling**
Anhängerkupplung mit einer Führungsrampenanordnung
Attelage de remorque avec assemblage de rampe de guidage

(30) Priority: 10.05.2006 GB 0609197
(43) Date of publication of application: 14.11.2007
(73) Proprietor: Fontaine International Europe Limited, Lowton, Warrington WA3 2AG (GB)
(72) Inventor: Fallon, Martin Francis, Northwich, Cheshire CW9 6AU (GB)
(74) Representative: Harrison Goddard Foote

(56) References cited:
- WO-A-20/05108194
- DE-C1- 10 223 612
- GB-A- 2 037 684
- US-A- 4 143 885
- US-A1- 2002 145 268

## Description

This invention concerns a lead on ramp assembly for use on a vehicle in association with a coupling for attachment of a trailer.

Documents US 2002/0145268 and GB 2 037 684 show lead-on ramps according to the preamble of claim 1.

In respect of an articulated lorry, a tractor unit vehicle is provided with a fifth wheel coupling for attachment of a trailer and a lead on ramp is commonly provided behind the coupling (when considered in the direction of travel). Such a lead on ramp typically comprises a pair of spaced apart sloping beams, which may be of channel section steel, connected by a crosspiece.

The purpose of the lead on ramp is to guide the front of the trailer upwards to facilitate its coupling, more specifically to facilitate engagement of a kingpin dependent from a front region of the trailer into a rearwardly directed slot in the fifth wheel coupling. In the absence of such a ramp, rear mudguards/mud wings of the tractor unit vehicle may be damaged upon trailer coupling, and even the chassis itself may be damaged if the trailer is not correctly aligned as coupling is attempted. However, the presence of the ramp may also cause problems. For example, an articulation angle of 7 degrees in a vertical direction is usually allowed for between the tractor unit and the trailer, but when this is near maximum or is exceeded, e.g. when travelling over steep hills or boarding ferries, the under carriage of the trailer may contact the ramp and either the ramp or the undercarriage may be damaged.

An object of the invention is to avoid the aforesaid problems.

With this object in view, the invention provides a lead on ramp assembly for use on a vehicle in association with a coupling for attachment of a trailer, said assembly comprising at least one ramp member having an upper ramp surface and having means for pivotable mounting relative to a chassis of the vehicle so as to be movable between a raised operative condition wherein the upper surface is inclined at a predetermined angle relative to the chassis and a lowered non-operative condition, drive means for moving said ramp member between its raised and lowered conditions, sensor means for detecting an arrangement indicative of attachment of the trailer to the associated coupling and control means operatively connected to both the drive means and the sensor means whereby the drive means is caused to move the ramp member to its lowered condition once the sensor means detects the arrangement indicative of the trailer being attached to the coupling and the drive means is actuated to move the ramp member to its raised condition once the sensor means detects that the arrangement is indicative that the trailer is no longer attached to the coupling.

The drive means may suitably comprise at least one hydraulic or pneumatic ram. There are various ways in which such a ram or rams may be mounted and operative to raise and lower the ramp. Additional support means for the ramp member in its raised condition may be provided, for example in the form of a displaceable support block.

The sensor means may conveniently detect whether the coupling is closed or open, the arrangement indicating that the coupling is closed being indicative of attachment of the trailer to the associated coupling, while the arrangement indicating that the coupling is open being indicative of detachment of the trailer from the coupling even though the trailer may not, at that stage, have moved away from the towing vehicle. In this respect, a conventional fifth wheel coupling includes a release arm which engages a coupling plate in two different positions such that it projects further out from the coupling plate when the coupling is open compared to when the coupling is closed, and also at a different angle in these two positions. The sensor may then comprise a proximity switch mounted on the coupling plate adjacent the release arm to detect the position of this release arm. However, in other embodiments, suitable sensor means may be provided adjacent a slot in the fifth wheel coupling in order to detect more directly either the position of a locking bar which opens and closes the slot in the coupling, or the presence of the trailer kingpin in a correct position in the slot for secure coupling of the trailer thereto.

The invention will be described further, by way of example, with reference to the accompanying drawings, in which:
Figure 1 is a schematic side view showing how a first embodiment of the ramp assembly of the invention operates;
Figure 2 is a similar view showing operation of a second embodiment of the assembly of the invention;
Figure 3 is a similar view of a third embodiment of the assembly of the invention;
Figure 4 is a schematic transverse cross-section of the ramp assembly shown in figure 3;
Figure 5 is another schematic side view of a fourth embodiment of the assembly of the invention; and
Figure 6 is a view from above of the same fourth embodiment of figure 5.

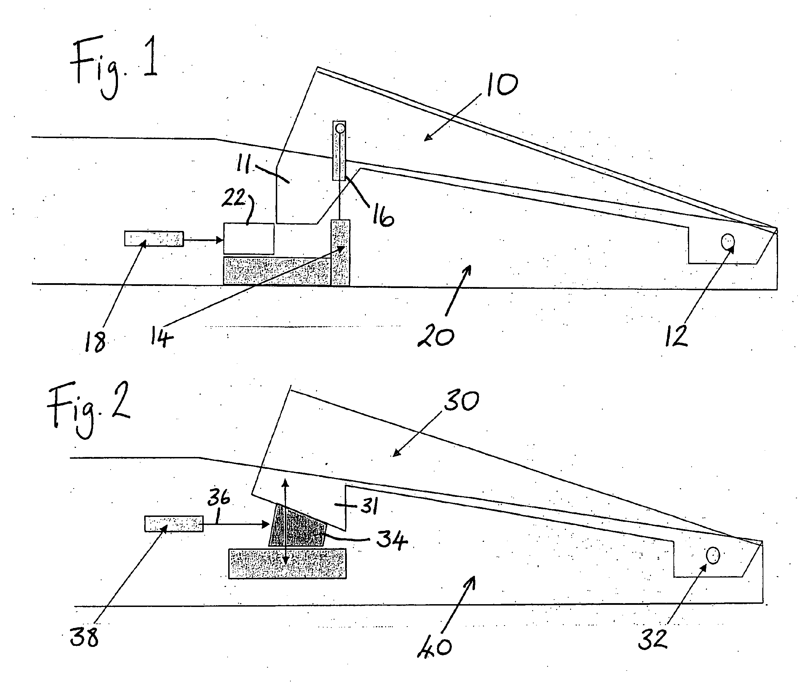

A first embodiment, as illustrated in figure 1, comprises two spaced apart, substantially parallel ramp members 10, which are each pivotally attached by a pivot pin 12 near their rear end to a sloping rear end of a chassis 20 of a towing vehicle (tractor unit). A fifth wheel coupling for attachment of a trailer is typically mounted onto the chassis 20 in front of the ramp assembly, but such coupling is not shown here.

Only one of the ramp members 10 is shown in figure 1. These ramp members 10 are of downwardly open channel section form and may suitably be connected by a crosspiece (not shown). Respective fluid actuated cylinders 14 (namely pneumatically or hydraulically operated cylinders) are mounted below each of the ramp members 10 with extensible rams or pistons 16 engaging into the channel of the ramp member 10 to raise or lower it. The ramp member 10 is shown in figure 1 in its raised position. The respective cylinders 14 are arranged to operate simultaneously on the respective ramp members 10 to achieve even upward pressure on the pair of ramp members 10.

Further fluid actuated cylinders 18, again one for each ramp member 10, operate to displace respective support blocks 22 into position below a downward extension 11 at the front of each ramp member 10 once the ramp members 10 have been raised. These cylinders 18 act in synchrony with the cylinders 14 and act to withdraw the support blocks 22 when the ramp members 10 are to be lowered again. In a modified version, however, there may be only a single cylinder 18 acting upon a single support block 22 which is wide enough to fit below and support both ramp members of the assembly.

The fluid actuated cylinders 14, 18 are operated by a central control means of the towing vehicle dependent on input from sensor means (not shown) associated with the fifth wheel coupling to the central control means so that the ramp members 10 will be raised when the coupling is detected to be open (generally indicating that the trailer may be about to be connected or moved away) and lowered when the coupling is detected to be closed (generally indicating that the trailer has been connected and no longer requires guidance on to the rear of the chassis 20).

A second embodiment, as illustrated in figure 2, also comprises two spaced apart, substantially parallel ramp members 30, which are each pivotally attached by a pivot pin 32 near their rear end to a sloping rear end of a chassis 40 of a towing vehicle (tractor unit). Again, only one of the ramp members 30 is shown in figure 2 and these ramp members 30 may suitably be connected by a crosspiece (not shown). Each ramp member 30 may be of downwardly open channel section form for a major part of its length, but with a cross wall connecting between downward extensions 31 at its forward end to provide a bearing surface for a wedge shaped block 34 which is moved to and fro by a transversely mounted fluid actuated cylinder 38 to raise and lower the ramp member 30. A piston 36 of the cylinder 38 is extended to push the block 34 towards the rear of the chassis 40 in order to raise the ramp member 30.

Spring means (not shown) are provided to assist the return of the ramp member 30 to its lowered condition. Thus, a helical spring may be provided to act between the ramp member 30 at a position near the extension 31 and the chassis 40. Alternatively (or additionally) a suitable torsion spring may act about the pivot pin 32 to urge the ramp member 30 back to its lowered position.

As with the first embodiment, respective cylinders 38 and blocks 34 may be provided for each of the ramp members 30 and these should then be operated simultaneously. However in a modified version a single cylinder 38 may act on a single block 34 which is wide enough to fit below both of the spaced ramp members 30. The control of the cylinder or cylinders 38 is as already described for the first embodiment.

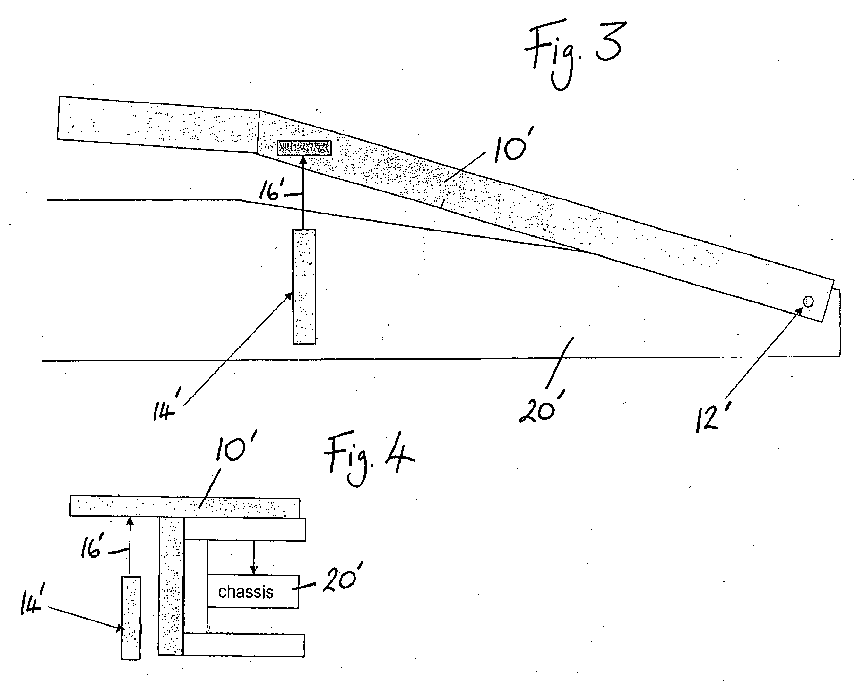

The third embodiment of ramp assembly, as illustrated in figures 3 and 4, is a modified version of the first embodiment shown in figure 1. To avoid repetition, only the modified features are mentioned here and the remainder is the same as already described.

Instead of being in the form of downwardly open channel sections, the respective ramp members, here denoted by reference numeral 10' for the single member which is shown, are of T-shaped profile, as is evident from figure 4. The chassis 20', which may be provided as two separate spaced apart side sections, or may be continuous, extends below the facing, inner sides of the T profiles of the respective ramp members 10', while the cylinder and piston 14', 16' for raising each ramp member 10' is mounted below the remote, outer side of the T profile of each of the ramp members 10'.

The ramp member 10' is also shown in this embodiment as being angled in longitudinal profile (Figure 3).

The arrangement shown in figures 3 and 4 may provide for more streamlined fitting of the ramp assembly into the chassis when in its lowered condition, as depicted in figure 4, and may also allow for easier access to the cylinders 14' for maintenance and repair etc.

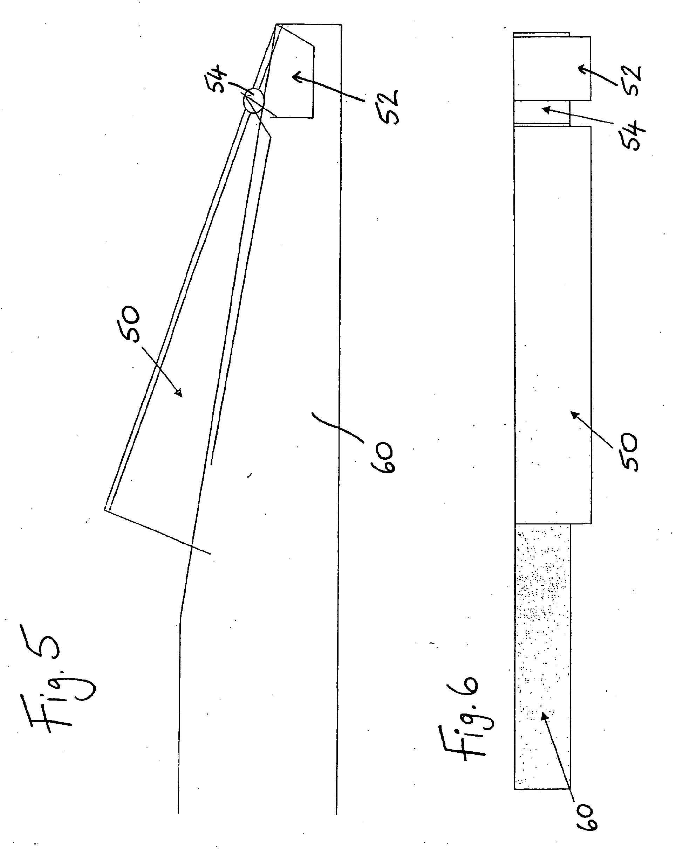

The fourth embodiment of ramp assembly, as illustrated in figures 5 and 6, is a modified version of any of the preceding embodiments. To avoid repetition, only the modified features are mentioned here and the remainder is the same as already described. In this embodiment, the ramp members 50, of which there are two, but only one shown, as before, and which are raised and lowered by any of the means previously described, are not pivotally connected directly to the chassis 60. Instead, they are pivotally connected by hinges 54 to respective additional brackets 52 which are fixed to the rear end of the chassis 60 and which may themselves be considered as part of the overall ramp assembly. In a modified version, a single such bracket may be provided as an elongate strip across the rear of the chassis 60.

The foregoing embodiments are illustrative and not limitative of the scope of the invention and many other variations in the detail of the configuration, mounting and operation of the ramp assembly is possible within the scope of the invention as defined in the claims.

## Claims

1. A lead on ramp assembly for use on a vehicle in association with a coupling for attachment of a trailer, said assembly comprising at least one ramp member (10; 30; 10'; 50) having an upper ramp surface and having means (12; 32; 12'; 54) for pivotable mounting relative to a chassis (20; 40; 20'; 60) of the vehicle so as to be movable between a raised operative condition wherein the upper surface is inclined at a predetermined angle relative to the chassis and a lowered non-operative condition, **characterised in that** it further comprises drive means (14,16; 34, 36; 14', 16') for moving said ramp member between its raised and lowered conditions, sensor means for detecting attachment of the trailer to the associated coupling and control means operatively connected to both the drive means and the sensor means whereby the drive means is caused to move the ramp member to its lowered condition once the sensor means detects that the trailer is attached to the coupling and the drive means is actuated to move the ramp member to its raised condition once the sensor means detects that the trailer is no longer attached to the coupling.

2. A lead on ramp assembly according to claim 1 wherein the drive means comprises at least one hydraulic or pneumatic ram (16; 38; 16').

3. A lead on ramp assembly according to claim 1 or 2 wherein additional support means for the ramp member in its raised condition is provided, for example in the form of a displaceable support block (22; 34).

## Patentansprüche

1. Führungsrampenanordnung zur Verwendung an einem Fahrzeug in Verbindung mit einer Kupplung zur Anbringung eines Anhängers, wobei die Anordnung wenigstens ein Rampenelement (10, 30, 10', 50) mit einer oberen Rampenoberfläche und einem Mittel (12, 32, 12', 54) zum schwenkbaren Montieren bezüglich eines Fahrgestells (20, 40, 20', 60) des Fahrzeugs aufweist, sodass es beweglich zwischen einem erhöhten, betriebsfähigen Zustand, in dem die obere Oberfläche in einem vorbestimmten Winkel gegenüber dem Fahrgestell geneigt ist, und einem abgesenkten, nichtbetriebsfähigen Zustand ist, **dadurch gekennzeichnet, dass** die Anordnung ferner ein Antriebsmittel (14, 16, 34, 36, 14', 16') zum Bewegen des Rampenelements zwischen seinem erhöhten und abgesenkten Zustand, ein Sensormittel zum Detektieren der Anbringung des Anhängers an die zugehörige Kupplung und ein Kontrollmittel aufweist, das operativ sowohl mit dem Antriebsmittel als auch mit dem Sensormittel verbunden ist, wodurch das Antriebsmittel veranlasst wird, das Rampenelement in seinen abgesenkten Zustand zu bewegen, sobald das Sensormittel detektiert, dass der Anhänger an der Kupplung angebracht ist, und das Antriebsmittel betätigt wird, um das Rampenelement in seinen erhöhten Zustand zu bewegen, sobald das Sensormittel detektiert, dass der Anhänger nicht mehr an der Kupplung angebracht ist.

2. Führungsrampenanordnung nach Anspruch 1, bei der das Antriebsmittel wenigstens einen hydraulischen oder pneumatischen Kolben (16, 38, 16') aufweist.

3. Führungsrampenanordnung nach Anspruch 1 oder 2, bei der ein zusätzliches Stützmittel für das Rampenelement in seinem erhöhten Zustand vorgesehen ist, beispielsweise in Form eines verlagerbaren Stützblocks (22, 34).

## Revendications

1. Ensemble de rampe de guidage destiné à être utilisé sur un véhicule en association avec un attelage pour la fixation d'une remorque, ledit ensemble comprenant au moins un élément de rampe (10 ; 30 ; 10' ; 50) ayant une surface de rampe supérieure et ayant des moyens (12 ; 32 ; 12' ; 54) pour le montage pivotant par rapport à un châssis (20 ; 40 ; 20' ; 60) du véhicule afin d'être mobile entre une condition opérationnelle levée dans laquelle la surface supérieure est inclinée selon un angle prédéterminé par rapport au châssis et une condition non opérationnelle abaissée, **caractérisé en ce qu'**il comprend en outre des moyens d'entraînement (14, 16 ; 34, 36 ; 14', 16') pour déplacer ledit élément de rampe entre ses conditions levée et abaissée, des moyens de capteur pour détecter la fixation de la remorque à l'attelage associé et des moyens de commande raccordés à la fois aux moyens d'entraînement et aux moyens de capteur, les moyens d'entraînement étant amenés à déplacer l'élément de rampe jusqu'à sa condition abaissée une fois que les moyens de capteur ont détecté que la remorque est fixée à l'attelage et les moyens d'entraînement étant actionnés pour déplacer l'élément de rampe jusqu'à sa condition levée une fois que les moyens de capteur ont détecté que la remorque n'est plus fixée à l'attelage.

2. Ensemble de rampe de guidage selon la revendication 1, dans lequel les moyens d'entraînement comprennent au moins un vérin hydraulique ou pneumatique (16 ; 38 ; 16').

3. Ensemble de rampe de guidage selon la revendication 1 ou 2, dans lequel on prévoit des moyens de support supplémentaires pour l'élément de rampe dans sa condition levée, par exemple, sous la forme d'un bloc de support déplaçable (22 ; 34).
